Europäisches Patentamt

European Patent Office

Office européen des brevets

(11) Publication number: **0 231 400**
**A1**

## EUROPEAN PATENT APPLICATION

(21) Application number: **85308179.2**

(22) Date of filing: **11.11.85**

(51) Int. Cl.4: **A61C 8/00**

(43) Date of publication of application:
**12.08.87 Bulletin 87/33**

(84) Designated Contracting States:
**AT BE CH DE FR GB IT LI LU NL SE**

(71) Applicant: **Mozsary, Peter Gabriel**
**4490 Glencannon Drive**
**Suisun California 94585(US)**

(72) Inventor: **Mozsary, Peter Gabriel**
**4490 Glencannon Drive**
**Suisun California 94585(US)**

(74) Representative: **Barker, Rosemary Anne et al**
**Barlow, Gillett & Percival 94 Market Street**
**Manchester M1 1PJ(GB)**

(54) Osteocorrective dentoalveolar implant system.

(57) A post (34) is supported by a root (12), which is fixed to a jawbone (14), and has a crown (44) connected thereto. A resilient member (48) is provided for cushioning forces applied to the crown (44) and a spacer (62) is also included to limit the movement between the crown (44) and the root (12) upon the application of force to the crown (44).

FIG.__1.

EP 0 231 400 A1

## OSTEOCORRECTIVE DENTOALVEOLAR IMPLANT SYSTEM

The present invention relates to a novel dental implant system which very closely mimics the characteristics of a natural tooth. Dental implants have become quite successful in many aspects. The problems of chronic infection and bone loss have been generally overcome by the use of a two stage implant such as those described in United States Patent 3,589,011 and 4,416,629. There still remain problems concerning traumatic damage to the jawbone resulting in the loss of the implant and loss of teeth. United States patent 4,416,629 describes an implant having a super structure with a weakened portion to protect the implant and the adjacent teeth against damages resulting from forces which overload the implant system. United States patent 3,955,280 addresses the problem of shock absorption by the use of a spring placed within the implant. United States patent 4,270,905 employs an elastic material which attaches directly to the jawbone to absorb the masticatory load.

None of the prior implant systems provides for limiting the mobility of the artificial tooth in the same manner and to the same extend as a natural tooth. An implant system which closely mimics the natural tooth in shock absorbing and mobility characteristics would be a great advance in the dental field.

In accordance with the present invention a novel and useful dental implant system closely resembling a natural tooth is provided.

The implant system of the present invention utilizes a root having means for fixing the root to the jawbone. A post is also included and has means for supporting the same to the root. A crown or superdenture connects to the post.

Means is also provided in the implant of the present invention for cushioning forces applied to the crown during masticatory activity. The force cushioning means may take the form of a resilient member having a portion placed between the post and the root.

The implant may also include means for attenuating relative movement between the crown and the root upon the application of force to the crown. Such means may take the form of a spacer disposed adjacent the means for cushioning forces applied to the crown. The relative movement attenuating means may take the form of a spacer placed adjacent a resilient member. In this case, the root may include a first surface and the spacer may include a second surface such that the first and second surfaces are capable of contacting one another. The resilient member could be formed into a first portion placed between the crown and the resilient member and a second portion which lies closer to the root than the first portion thereof. The spacer second portion would provide the heretofore described second surface which is capable of touching the first surface provided by the root. The spacer may be assembled such that its second portion lies apart from the root i.e. the first surface of the root and the second surface of the second portion of the spacer do not touch, when no force is acting on the crown. Also, the interposed resilient member would permit the second portion of the spacer to travel towards the root resulting in the engagement of the first and second surfaces of the root and second portion of the spacer respectively when force is applied to the crown. The gap between the first surface of the root and the second surface of the second portion of the spacer may be predetermined to follow the mobility found in the natural tooth.

The present implant system may also embrace forming the post with a flange which lies adjacent the spacer. The post may be movable in relation to the root which causes relative movement between the post and the spacer.

Moreover, the present implant system may encompass means for holding artificial bone material to the root. Such artificial bone would replace a segment of the jawbone missing subsequent to the extraction of the natural tooth before the implantation of the artificial tooth. The means for holding the artificial bone may include a concave chamber formed about the exterior of the root.

It may be apparent that a novel and useful dental implant system has been described.

It is therefore an object of the present invention to provide a dental implant system which is permanently placed in the jawbone and which possesses the functions of a natural tooth after implantation.

It is another object of the present invention to provide a dental implant system which includes a structural provision for replacement for bone loss occurring during extraction of the natural tooth.

It is another object of the present invention to provide a dental implant system which possesses the resiliency and limited mobility qualities normally found in a natural tooth.

It is still another object of the present invention to provide a dental implant system which is manufactured practically and which may be implanted routinely by dental surgeon.

It is another object of the present invention to provide a dental implant system which includes a super structure which can be replaced without damage to the implanted root portion.

Yet another object of the present invention is to provide a dental implant system which results in an enhanced cosmetic effect over the implants of the prior art.

Another object of the present invention is to provide a dental implant system which provides a wider load bearing area than prior implants since portions of the missing natural bone has been replaced by artificial bone.

The invention possesses other objects and advantages especially as concerns particular characteristics and features thereof which will become apparent as the specification continues.

The invention will be described further, by way of example, with reference to the accompanying drawings, in which:

FIG. 1 is a sectional view of the implant system of the present invention permanently affixed to the jawbone.

FIG. 2 is an enlarged sectional view of the right side portion of FIG. 1 showing the dynamics associated with masticatory forces.

FIG. 3 is a sectional view taken along line 3-3 of FIG 1.

For a better understanding of the invention reference is made to the following detailed description of the preferred embodiments of the invention which should be referenced to the hereinabove described drawings.

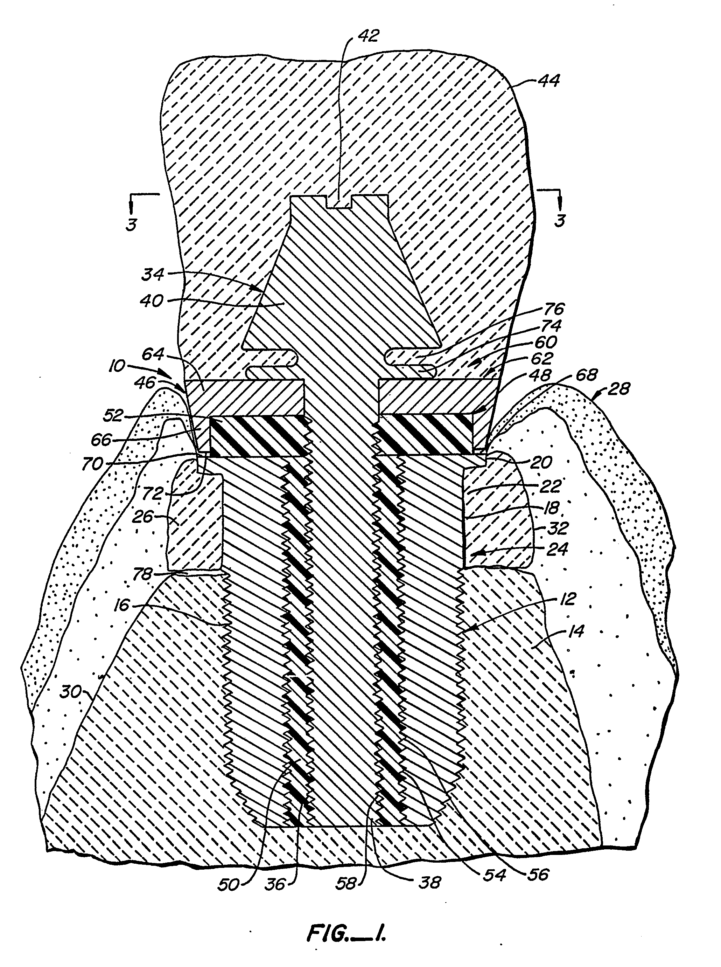

With reference to FIG. 1 a dental implant system 10 is shown. The implant system 10 includes, as one of its elements, a root 12 which is fixed to the jawbone 14 in place of an extracted natural tooth. Root 12 may be constructed of titanium, or other relatively rigid material which is compatible with human tissues. Root 12 would be implanted first within jawbone 14 per the techniques described and known in the prior art. Root 12 is generally cylindrical and has an external threaded portion 16 which may be self tapping. In addition, a relatively smooth surface 18 extends from the upper extremity of threaded portion 16 through a lip 20. A recess 22 is formed between threaded portion 16 and 20. It may be apparent that jawbone 14, in FIG. 1 is missing its natural upper portion. This results from the extraction of the natural tooth from jawbone 14 prior to insertion of root 12. Recess 22 formed along surface 18 between lip 20 and the upper portion of jawbone 14 constitutes means 24 for holding artificial bone 26 to root 12 Gingiva 28 grows naturally along the outer surface 30 of jawbone 14 and along the outer surface 32 of artificial bone 26. The appearance of implant 10 becomes cosmetically acceptable as a result of means 24.

Implant 10 also includes a post 34 which is supported to the root 12. Post 34 includes a threaded portion 36 which is located on the lower part 38 thereof. Post 34 possesses an upper part 40 which includes a slot 42 to facilitate the turning of post 40 within root 12. A crown 44, of known construction may be formed over post 42.

Interposed root 12 and post 34 is means 46 for cushioning forces applied to crown 44. Means 46 may take the form of a resilient member 48 having the first element 50 and a second element 52. First element 50 includes an external threaded portion 54 which threadingly engages the internal threaded portion 56 of root 12. An internally threaded portion 58 of second element 52 threadingly engages the externally threaded portion 36 of post 34. Thus, the first element 50 serves the dual purpose of cushioning forces on crown 34, expecially those having lateral components, and as means for supporting post 34 to root 12. Post 34 may be constructed of materials similar to those used for root 12, such as titanium. On the other hand resilient member 48 could be constructed of plastic like material such as teflon, silicon rubber, and the like. First element 50 of resilient member 48 may be separate from second element 52 or formed as a unitary body. Second element 52 is especially useful in absorbing vertical forces on crown 44. It should be noted that crown 44 within a human jaw could receive forces having both lateral and vertical components.

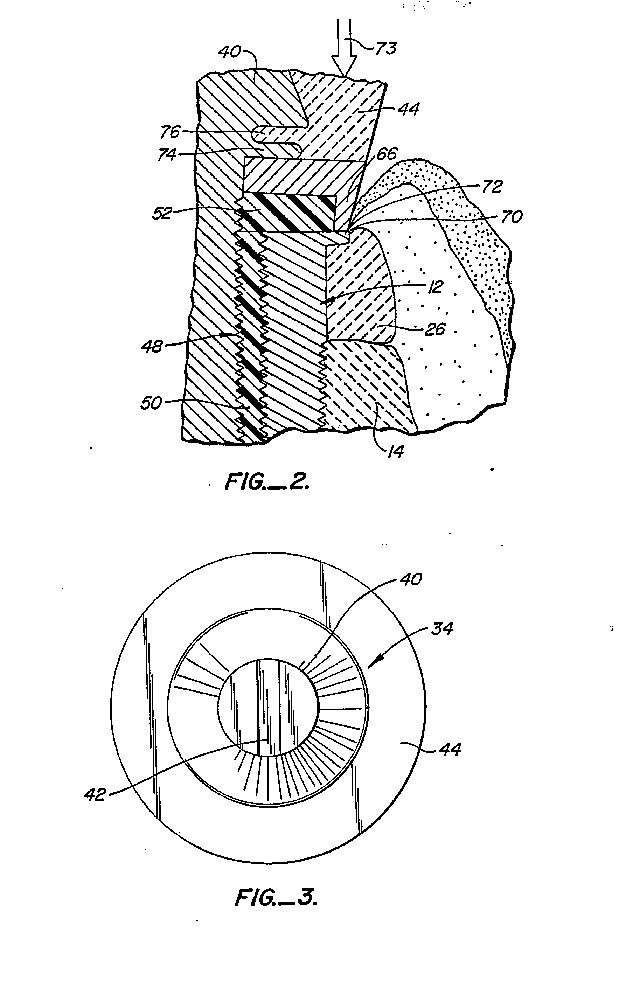

System 10 further includes means 60 for attenuating relative movement between crown 44 and root 12. Means 60 may embrace the use of a spacer 62 which again may be constructed of material similar to post 34 and root 12. Spacer 62, in the embodiment shown in FIGS. 1 and 2, has a first portion 64 and a second portion 66. First portion 64 of spacer 62 lies between crown 44 and resilient member 48. Second portion 66 of spacer 62 is placed closer to root 12 than first portion 64 thereof. A gap 68 is generally formed between the upper surface 70 of root 12 and the lower surface 72 of second portion 66 of spacer 62. Spacer 62 possesses a degree of resiliency, generally of a lesser degree than member 48.

Turning to the upper part 40 of post 34 it may be seen that a flange 74 is formed which lies immediately adjacent spacer 62. Thus,as slot 42, FIG. 3 is engaged by a turning tool (not shown). Flange 74 compresses spacer 62 which in turn compresses second element 52 of resilient member 48. Gap 68 is formed by sizing spacer 62 and resilient member 48 according to the type of material used for those items. The position of post 34 may be controlled and measured to provide the proper gap 68 between surfaces 70 and 72. Although the root 12 is shown in the embodiment in FIG. 1 as being bored entirely through the central portion thereof, root 12 may also be constructed with a bottom to limit the downward movement of post 34 to properly form gap 68. It has been found that the natural periodental ligament permits the natural tooth to move about 200 microns.

Turning to FIG.2 it may be seen that force arrow 73 represents a force that would close gap 68 until second portion 66 of spacer 62 would touch root 12. At this point crown 44 and post 34 would have limited mobility. It should be noted, however, that a groove or/crevice 76 between upper portion 40 of post 34 and flange 74 would permit a small degree of deformation of upper part 40 of post 34. This feature permits the surgeon to adjust upper portion 40 of root 34 to render crown 44 parallel to adjacent teeth. Returning to FIG. 1 it may be seen that a space 78 may be left between artificial bone 26 and jawbone 14. Natural connected tissue may grow in space 78 to aid in the joining of artificial bone section 26 and jawbone 14. Also, this scar tissue adds a degree of resiliency in the implant system 10.

In operation, the surgeon implants root 12 by known surgical techniques. Resilient member 48 is threaded into root 12 and post 34 is threaded within resilient member 48. A spacer 62 is interposed second element 52 of resilient member 48 and post 34. A gap 68 is formed between surfaces 70 and 72 of root 12 and second portion 66 of spacer 62. Upper part 40 of root 34 is bent or formed to permit crown 44 placement paralled to adjacent teeth. Vertical forces on crown 44 during masticatory activity would be absorbed by resilient member 48 and, to a certain extent, first portion 64 of spacer 62. Lateral components of any forces on crown 44 would again be absorbed by resilient member 48 and mobility of crown 44 would be limited according to the width of gap 68. Thus the implant system provides for the permanent replacement of a missing bone following a tooth extraction, and a permanent root 12. The super structure comprising the post 34, resilient member 48, spacer 62, and crown 44 may be removed without damaging the implanted root 12.

While in the foregoing embodiments of the present invention have been set forth in considerable detail for the purpose of making a complete disclosure of the invention, it may be apparent to those of skill in the art that numerous changes may be made in such detail without departing from the spirit and principles of the invention.

## Claims

1. A dental implant system for placement in an alveolus of a jawbone (14) comprising a root (12) including means for fixing the root (12) to the jawbone (14), a post (34) including means whereby the post (34) may be supported by the root (12); and a crown (44) connected to the post (34), characterised in that means (46) are provided for cushioning forces applied to the crown (44) and means (60) are provided for attenuating relative movement between the crown (44) and the root - (12) upon the application of force to the crown (44).

2. A dental implant system according to Claim 1 in which the means (60) for attenuating relative movement between the crown (44) and the root - (12) includes a spacer (62) disposed adjacent the means (46) for cushioning forces applied to the crown (44).

3. A dental implant system according to Claim 2 in which the means (60) for attenuating relative movement between the crown (44) and the root - (12) includes a first surface (70) on the root (12), and a second surface (72) on the spacer (62), the second surface (72) being capable of contacting the first surface (70).

4. A dental implant system according to Claim 2 or 3 in which the spacer (62) comprises a first portion (64) disposed between the crown (44) and the means (46) for cushioning forces applied to the crown (44), and a second portion (66) lying closer to the root (12) than the first portion (64).

5. A dental implant system according to Claim 4 in which the spacer second portion (66) is capable of touching a part of the root (12) upon the application of force upon the crown (44), thereby attenuating relative movement between the crown - (44) and the root (12).

6. A dental implant system according to any preceding Claim in which the means (46) for cushioning forces applied to the crown (44) comprises a resilient member (48).

7. A dental implant system according to Claim 6 in which the resilient member (48) includes a first element (50) placed between the post (34) and the root (12), and a second element (52) placed between the spacer (62) and the root (12).

8. A dental implant system according to Claim 7 in which the first and second elements (50, 52) of the resilient member (48) form an integral unit.

9. A dental implant system according to any preceding Claim in which the post (34) includes a flange (74) lying adjacent the spacer (62), and a crevice (76) between the flange (74) and the rest of the post (34), the post (34) being movable in relation to the root (12).

10. A dental implant system according to any preceding Claim in which the root (12) includes means for holding artificial bone (26) to the root - (12).

11. A dental implant system according to Claim 10 in which the means for holding artificial bone - (26) to the root (12) comprises a recessed portion - (22) formed on the root (12) adjacent the jawbone - (14).

12. A dental implant system for placement in an alveolus of a jawbone (14) comprising a root - (12) including means for fixing the root (12) to the jawbone (14), a post (34) including means whereby the post (34) may be supported by the root (12), and a crown (44) connected to the post (34), characterised in that means (46) are provided for cushioning forces applied to the crown (44) and means are provided for holding artificial bone (26) to the root (12).

13. A dental implant system according to Claim 12 in which the means for holding artificial bone - (26) to the root (12) comprises a recessed portion - (22) formed on the root (12) adjacent the jawbone - (14).

FIG.__1.

FIG._2.

FIG._3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | US-A-4 552 532 (MOZSARY)<br>* whole document * | 1-13 | A 61 C    8/00 |
| | --- | | |
| X | EP-A-0 126 624 (ARRUGA ARTAL)<br>* page 3, line 23 - page 3, line 8; figure 1 * | 1,6 | |
| | --- | | |
| X | DE-A-3 300 764 (BADEMIS)<br>* page 13, line 21 - page 16, line 22; figure 1 * | 1 | |
| | --- | | |
| X | · FR-A-1 584 711 (DELAGE)<br>* page 1, right-hand column, line 37 - page 2, left-hand column, line 11 * | 1,6 | |
| A | | 2 | **TECHNICAL FIELDS SEARCHED (Int. Cl 4)** |
| | --- | | A 61 C    8/00 |
| A | DE-C-1 079 277 (GERBER)<br>* column 3, lines 21-31; figure * | 1-3 | A 61 C   13/00 |
| | --- | | |
| D,A | US-A-4 416 629 (MOZSARY et al.)<br>* column 1, line 47 - column 2, line 19; figures 1, 2 * | 1,6,12 | |
| | --- | | |
| A | DE-B-2 413 883 (KOCH)<br>* column 4, lines 9-25 * | 1,7 | |
| | ---                    -/- | | |

The present search report has been drawn up for all claims

| Place of search | Date of completion of the search | Examiner |
|---|---|---|
| BERLIN | 24-06-1986 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| European Patent Office | | |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 934 347 (LASH et al.) <br> * column 2, line 47 - column 3, line 7; figure 2 * | 1,8 | |
| A | DE-B-1 943 932 (RIVOIR) <br> * column 6, lines 26-59 * | 1 | |
| A | FR-A-2 155 431 (PLESSEY HANDEL UND INVESTMENTS AG) <br> * page 5, lines 15-24; figure 3 * | 1 | |
| A | GB-A-2 063 680 (OSTEO AG) <br> * page 1, lines 37-72; figure 2 * | 1 | |
| A | DE-C-1 042 835 (RAUSCHER) <br> * column 2, lines 28-43 * | 10-13 | |
| A | FR-A- 894 771 (RUETZ) <br> * page 2, lines 18-21; figure 3 * | 12 | TECHNICAL FIELDS SEARCHED (Int. Cl.4) |
| D,A | US-A-3 955 280 (SNEER) | | |

The present search report has been drawn up for all claims

| Place of search | Date of completion of the search | Examiner |
|---|---|---|
| BERLIN | 24-06-1986 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82